Europäisches Patentamt

European Patent Office

Office européen des brevets

(19)

(11) Veröffentlichungsnummer: **0 302 066
B1**

(12) **EUROPÄISCHE PATENTSCHRIFT**

(45) Veröffentlichungstag der Patentschrift: **19.12.90**

(21) Anmeldenummer: **87902305.9**

(22) Anmeldetag: **15.04.87**

(86) Internationale Anmeldenummer:
**PCT/AT87/00027**

(87) Internationale Veröffentlichungsnummer:
**WO 87/06100 22.10.87 Gazette 87/23**

(51) Int. Cl.⁵: **A 21 B 1/24, A 21 B 3/04**

(54) BACKOFEN.

(30) Priorität: **18.04.86 AT 1037/86**

(43) Veröffentlichungstag der Anmeldung:
**08.02.89 Patentblatt 89/06**

(45) Bekanntmachung des Hinweises auf die
Patenterteilung:
**19.12.90 Patentblatt 90/51**

(84) Benannte Vertragsstaaten:
**DE FR GB IT SE**

(56) Entgegenhaltungen:
**EP-A- 0 002 784
AT-B- 378 469
DE-A- 2 857 125
FR-A- 2 483 178
FR-A- 2 535 036
NL-A- 256 443**

(73) Patentinhaber: **König, Helmut, jr.
Rotmoosweg 15
A-8045 Graz (AT)**

(72) Erfinder: **König, Helmut, jr.
Rotmoosweg 15
A-8045 Graz (AT)**

(74) Vertreter: **Brauneiss, Leo et al
Patentanwälte Dipl.-Ing. Leo Brauneiss, Dipl.-
Ing. Dr. Helmut Wildhack Strohgasse 10
A-1030 Wien (AT)**

EP 0 302 066 B1

**Beschreibung**

Die Erfindung bezieht sich auf einen Backofen mit einem durch eine Türe zugänglichen Backraum, in den ein das Backout tragender, während des Backprozesses stillstehender Wagen einbringbar ist, mit zwei seitlich des Backraumes zu dessen beiden Seiten über die wirksame Backraumhöhe durchlaufenden Luftkanälen, deren jeder vom Backraum durch eine mit einer Vielzahl von Luftdurchtrittsöffnungen versehene Zwischenwand getrennt ist, welche Luftkanäle während des Backprozesses von einem Gebläse über eine Umschalteinrichtung alternierend mit Heißluft versorgt werden, die von einer Heizung erwärmt und von einer Beschwadungseinrichtung befeuchtet wird, den Backraum in alternierender Richtung quer durchströmt und danach wieder zur Saugseite des Gebläses im Kreislauf zurückgesaugt wird, wobei das Gebläse und die Heizung höher als der Backraum und zumindest zum Teil über diesem angeordnet sind, und wobei die Deckwand des Backraumes dicht abgeschlossen ist.

Bei einer solchen bekannten Konstruktion (AT—PS 326 063) wird der Vorteil einer geringen Backofenbreite bei gleichmäßiger, fast horizontaler Durchströmung des Backraumes erzielt. Nachteilig ist jedoch, daß die Strömungswiderstände für die beiden Strömungsrichtungen des Heißluftstromes ungleich sind und daß für zumindest eine Strömungsrichtung erhebliche Strömungsverluste auftreten, bevor die Heißluft zum Backgut gelangen kann. Dies kann sich für empfindliche Backgutarten nachteilig auswirken.

Aus der EP—A—2784 ist es bei einem Backofen, bei welchem eine Wirbelzone der Heißluft in alternierender Richtung quer durch den Backofen bewegt wird, bekannt, eine Umschalteinrichtung mittig über dem Backraum anzuordnen, um eine gleichmäßige Luftzufuhr zu zwei zu beiden Seiten des Backraumes verlaufenden vertikalen Luftkanälen zu erhalten. Die Nachteile ungleicher Strömungswiderstände für die beiden Strömungsrichtungen des Heißluftstromes sind jedoch bei dieser bekannten Konstruktion nicht völlig vermieden, und durch eine dem Gebläse nachgeschaltete Heizung werden in den dem Backraum zuzuleitenden Luftstrom weitere Turbulenzen hineingetragen und ein Druckverlust bewirkt.

Die Erfindung setzt sich zur Aufgabe, diese Nachteile zu vermeiden und für eine gleichmäßige Warmluftzufuhr in beiden Richtungen des Warmluftstromes zu sorgen. Die Erfindung löst diese Aufgabe dadurch, daß die Heizung an der Saugseite des Gebläses im Rückstromweg der Heißluft angeordnet ist und daß ein gegen die Deckwand des Backraumes gerichteter Kanal an den Druckstutzen des Gebläses angeschlossen ist oder diesen Druckstutzen bildet, wobei das im Mittenbereich zwischen den beiden Luftkanälen liegende untere Ende dieses Kanals zu zwei oberhalb der Deckwand des Backraumes verlaufenden Luftzufuhrkanälen führt, die an die beiden Luftkanäle angeschlossen sind, wobei die Umschalteinrichtungen in diesem unteren Kanalende zwischen den beiden Luftzufurhkanälen angeordnet ist. Dadurch ergeben sich für die beiden Richtungen des Warmluftstromes symmetrische oder fast symmetrische Verhältnisse, zugleich aber auch eine Verringerung der Widerstände in jenem Teil des Warmluftkreislaufes, welchen die Luft durchströmen muß, um vom Gebläse zum Backraum zu gelangen. Während bei der erfindungsgemäßen Konstruktion die Luft für beide Strömungsrichtungen von der Druckseite des Gebläses über die Umschalteinrichtung und dem jeweiligen Luftzufuhrkanal in den an diesen Kanal angeschlossenen Luftkanal strömt, aus welchem die Luft durch Öffnungen der Zwischenwand in den Backraum eintritt, ist bei der zuerst geschilderten bekannten Konstruktion die Luft gezwungen, für die eine Strömungsrichtung von der Druckseite des Gebläses über das Heizregister in den von der Zwischenwand begrenzten Luftkanal zu strömen. Da das Heizregister, um wirksam zu sein, der Luft einen erheblichen Widerstand entgegensetzen muß, bedeutet dies für diese Strömungsrichtung einen strömungstechnischen Nachteil in Bezug auf die andere Luftströmungsrichtung. Gegenüber der zweitgenannten bekannten Konstruktion ergibt sich für beide Strömungsrichtungen der Heißluft eine wesentliche Verringerung des Druckabfalles der vom Gebläse geförderten Luft.

Die Anordnung der Heizung an der Zustromseite des Gebläses im Rückstromweg der Heißluft ist bei einer einer gattungsfremden Konstruktion an sich bekannt (AT—PS—378 469).

Im Sinne der Erfindung braucht der von der Druckseite des Gebläses zur Umschalteinrichtung führende, gegen die Deckwand des Backraumes gerichtete Kanal nur sehr kurz zu sein, er kann gegebenenfalls auch vom Druckstutzen des Gebläses selbst gebildet sein. In allen diesen Fällen ergibt sich durch die annähernd symmetrische Ausbildung der zuvor erwähnte Vorteil der gleichmäßigen Luftströmung, verbunden mit dem Vorteil eines geringen konstruktiven Aufwandes und einer platzsparenden Bauweise, insbesondere wenn gemäß der bevorzugten Ausführungsform die Umschalteinrichtung von einer um eine horizontale, in Einbringerichtung des Wagens verlaufende Achse schwenkbaren Luftumlenkklappe gebildet ist, da auf diese Weise gesonderte Umlenkeinrichtungen für die von oben zum jeweiligen Luftzufuhrkanal zuströmende Luft eingespart werden können.

Ein wesentlicher Vorteil liegt auch darin, daß die erfindungsgemäße Konstruktion unabhängig ist von der Art und Weise, auf welche die Luft aus dem Backraum zur Saugseite des Gebläses wieder zurückgeführt ist. Diese Luftrückführung kann daher den jeweils vorliegenden Gegebenheiten bzw. Wünschen angepaßt werden. Dies ist bei der eingangs geschilderten bekannten Konstruktion nicht der Fall, da dort die Luftrückführung über jenen Luftkanal erfolgen muß, durch welchen gerade keine Luftzufuhr zum Backraum erfolgt. Bei anderen bekannten Konstruktionen ist die Umschalteinrichtung von zwei Absperrklappen gebildet, die für die beiden Luftkanäle wechselweise wirksam werden und den Lufteintritt in einen der beiden Luftkanäle absperren. Dies bedeutet gegenüber der erfindungsgemäßen Konstruktion einen erhöhten Aufwand, da zwei Klappen statt nur einer einzigen Klappe erforderlich sind. Darüber hinaus entstehen erhebliche Druckverluste in der zum gerade wirksamen Luftkanal strömenden Warmluft dadurch, daß die vom Gebläse geförderte Warmluft mit hoher Geschwindigkeit auf die gerade geschlossene Absperrklappe trifft und wieder entgegen der Zustromrichtung zurückströmen muß, um für den Backraum wirksam zu werden. Diese Nachteile sind beim Erfindungsgegenstand völlig vermieden.

Gemäß einer Weiterbildung der Erfindung vergrößert sich der Querschnitt des Kanales gegen die Deckwand des Backraumes zu und es ist die Umschalteinrichtung an der Stelle des größten Querschnittes dieses Kanales angeordnet. Dadurch wird es möglich, auch solche Gebläsekonstruktionen im Sinne der Erfindung einzusetzen, bei welchen der Druckauslaß nicht über die gesamte wirksame Tiefe des Backraumes reicht, wie dies z.B. bei einem Querstromgebläse der Fall sein kann. Durch die erwähnte Vergrößerung des Kanalquerschnittes wird ein schmälerer Druckstutzen des Gebläses auf die wirksame Backraumtiefe oder zumindest einen Teil derselben vergrößert. Bei einer solchen Konstruktion ist zweckmäßig die Luftumlenkklappe erfindungsgemäß trapezförmig ausgebildet und um die breitere Basis des Trapezes schwenkbar. Dies ergibt eine besondere einfache, kostengünstige Konstruktion.

Vorzugsweise ist im Rahmen der Erfindung die Anordnung so getroffen, daß sich die beiden Luftzufuhrkanäle in Richtung zu den Luftkanälen zu verbreitern. Dadurch läßt sich—wie bereits erwähnt—der Strömungsquerschnitt für die zu den Luftkanälen zugeführte Heißluft auf die wirksame Tiefe dieser Luftkanäle (gemessen in Einschubrichtung des Wagens in den Backraum) vergrößern. Um hiebei zu vermeiden, daß sich eine Vergrößerung des Strömungsquerschnittes für die Luft ergibt, wodurch Druckverluste auftreten würden, nimmt erfindungsgemäß die Höhe der beiden Luftzufuhrkanäle in Richtung zu den Luftkanälen zu ab, vorzugsweise durch eine zur Luftumlenkklappe geneigte Bodenwand der beiden Kanäle.

Wenngleich die erfindungsgemäße Konstruktion den Vorteil hat, daß nur sehr wenige Umlenkungen für die Warmluft erforderlich sind, bis diese den jeweils wirksamen Luftkanal erreichen, so sind Wirbel im Luftstrom schon durch die Gebläseausbildung zumeist unvermeidlich. Um solche Turbulenzen im zuströmenden Heißluftstrom auszugleichen und eine möglichst gleichmäßige, laminare Beschickung des jeweils wirksamen Luftkanales mit Heißluft zu erzielen, ist gemäß einer Weiterbildung der Erfindung an der Übergangsstelle jedes Luftzufuhrkanales in den Luftkanal, vorzugsweise im Bereich der Backraumecke, eine Einrichtung zur Vergleichmäßigung der Luftströmung vorgesehen. Diese Einrichtung kann im Rahmen der Erfindung von mehreren stehenden Lamellen gebildet sein, die parallel zueinander mit in Richtung der Luftströmung gerichteten Ebenen angeordnet sind. Durch die zwischen diesen Lamellen verbleibenden Spalte ist die Luft gezwungen hindurchzuströmen, wodurch Ungleichmäßigkeiten im Luftstrom beseitigt werden. Eine besonders günstige Konstruktion ergibt sich im Rahmen der Erfindung dann, wenn die Lamellen an einem in Richtung der Einbringerichtung des Wagens verlaufenden Rohr befestigt sind, das zugleich zur Abstützung der geneigten Bodenwand des Luftzufuhrkanales dient.

Wenngleich die Erfindung—wie bereits erwähnt—unabhängig von der Art der Luftrückführung ist, so ist es doch in vielen Fällen bei der erfindungsgemäßen Konstruktion besonders günstig, zur Absaugung der in den Backraum eingetretenen Luft unten im Backraum, vorzugsweise an dessen tiefster Stelle, eine Öffnung vorzusehen, an die ein zur Beschwadungseinrichtung und sodann über die Heizung zum Gebläse führender Absaugkanal angeschlossen ist.

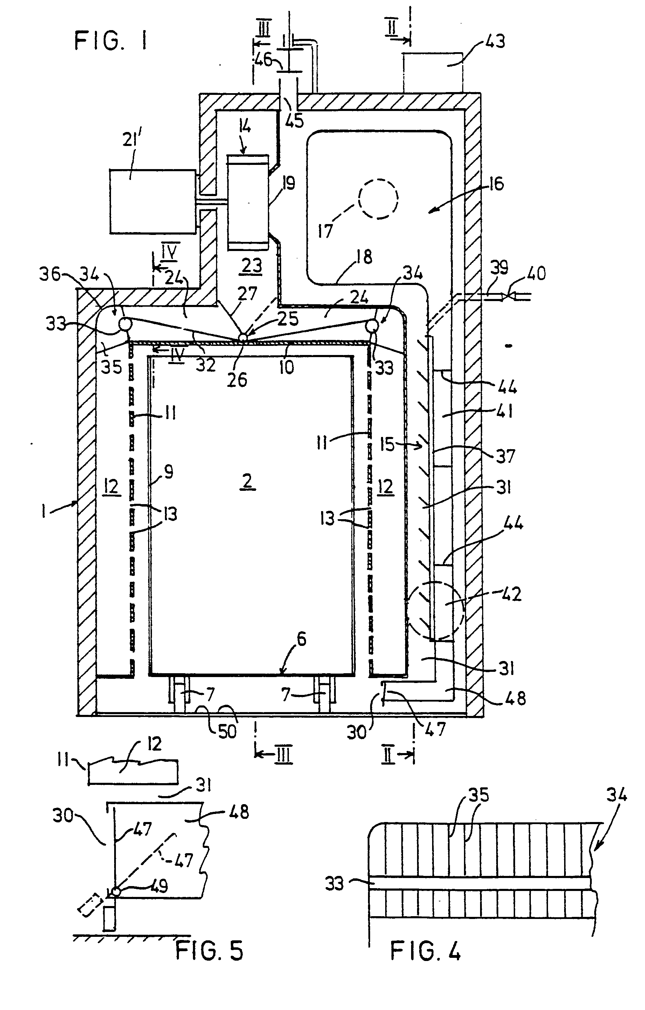

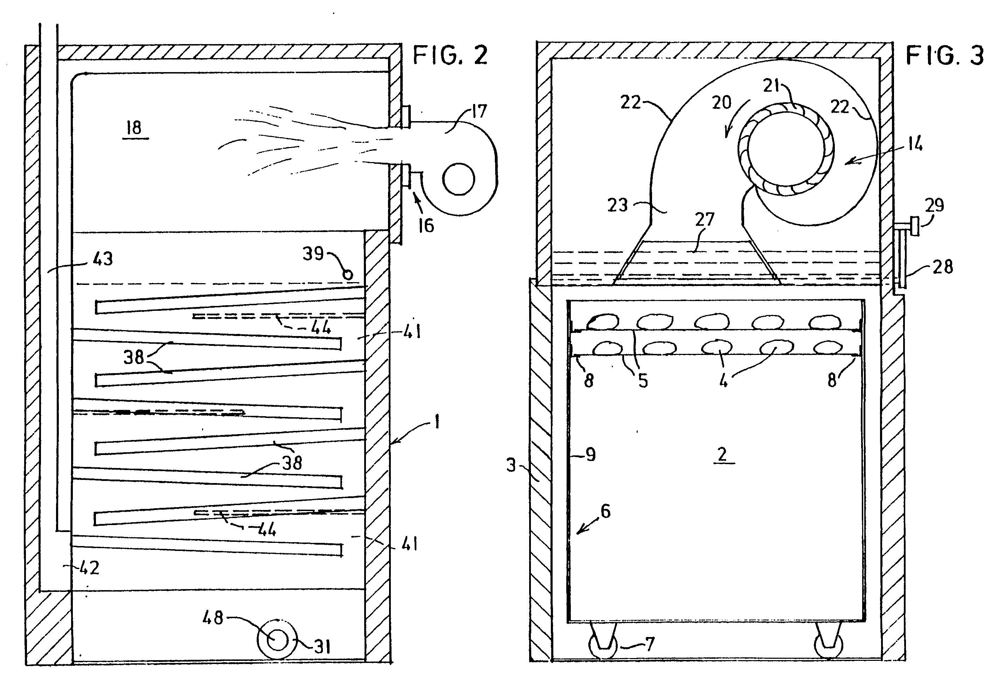

In der Zeichnung ist der Erfindungsgegenstand an Hand von Ausführungsbeispielen schematisch dargestellt. Fig. 1 zeigt einen Vertikalschnitt durch den Backofen. Die Fig. 2 und 3 sind Schnitte nach den Linien II-II bzw. III-III der Fig. 1. Fig. 4 ist ein Schnitt nach der Linie IV-IV der Fig. 1 in größerem Meßstab. Die Fig. 5 zeigt ein Detail der Fig. 1 in größerem Meßstab.

Der Backofen nach Fig. 1 hat ein wärmeisolierendes Gehäuse 1, in welchem ein begehbarer Backraum 2 vorgesehen ist, der durch eine Türe 3 (Fig. 3) zugänglich ist und in den auf eine Bodenplatte 50 ein das Backgut 4 auf Auflagen 5, insbesondere Backblechen, tragender Wagen 6 auf Rädern 7 einfahrbar ist. Dieser Wagen 6 ist zur Gänze aus dem Backraum 2 ausfahrbar, vom Backofen trennbar und gegen einen anderen Wagen austauschbar. Jeder Wagen 6 paßt in den Backraum 2 mit geringem seitlichen und oberen Spiel hinein. Die Auflagen 5 ruhen auf Winkelschienen 8 auf, die von seitlichen Stehern 9 des Wagens 6 getragen werden. Der Backraum 2 ist oben durch eine Deckwand 10 luftdicht abgeschlossen, ebenso, in Einschubrichtung des Wagens 6 gesehen, an seiner Hinterwand. Die beiden Seitenwände des Backraumes 2 sind über dessen wirksame Höhe (das ist jene Höhe, über welche das Backgut 4 tragende Auflagen 5 am Wagen 6 angeordnet sind) von Zwischenwänden 11 begrenzt, hinter denen vertikal über die gesamte wirksame Höhe des Backraumes 2 durchlaufende Luftkanäle 12 liegen, deren Tiefe, gemessen in Einschubrichtung des Wagens 6, gleich ist der in gleicher Richtung gemessenen Tiefe des Backraumes 2. Aus diesen Luftkanälen tritt die Luft durch Luftdurchtrittsöffnungen 13 in alternierender Richtung in den Backraum 2 ein, was später noch näher beschrieben wird. Die Luftdurchtrittsöffnungen 13 sind vorzugsweise schmale Schlitze, die über die Tiefe des Backraumes 2 durchlaufen. Zweckmäßig hat der Wagen 6 seine Auflagen 5 so angeordnet, daß jede Auflage etwas höher liegt als eine der schlitzförmigen Luftdurchtrittsöffnungen 13. Etwas unterhalb der jeweiligen Öffnung 13 hat der Wagen 6 ein horizontales Leitblech, welches zusammen mit der über ihm befindlichen Auflage einen Kanal für die durch die jeweilige Luftdurchtrittsöffnung 13 in den Backraum 2 eingeblasene Luft bildet, welcher Kanal diese Luft gegen die Mitte des Wagens 6 bzw. des Backraumes 2 hin leitet. Solche Kanäle sind in der veröffentlichten internationalen Patentanmeldung WO 86/01077 beschrieben.

Den zu beiden Seiten des Backraumes 2 angeordneten Luftkanälen 12 wird heiße, feuchte Luft von einem Gebläse 14 zugeführt, weclhes oberhalb des Backraumes 2 angeordnet ist. Die von diesem Gebläse 14 angesaugte Luft wird von einer Beschwadungseinrichtung 15 befeuchtet und von einer Heizung 16 erwärmt. Im dargestellten Ausführungsbeispiel hat die Heizung 16 einen oben am Gehäuse 1 an dieses angeflanschten Öl- oder Gasbrenner 17 (Fig. 2), dessen flamme in ein Flammrohr 18 eines üblichen Heizregisters eintritt, welches von der vom Gebläse 14 durch dessen Ansaugstutzen 19 (Fig. 1) angesaugten Luft umspült wird. Statt eines solchen Brenners 17 und des zugehörigen Flammrohres 18 kann auch ein in üblicher Weise ausgebildetes elektrisches Heizregister, bestehend aus mehreren parallelen Heizstäben, treten, die von der aufzuwärmenden Luft umspült werden. Die Heizung 16 liegt zumindest zum Teil über dem Backraum 2 bzw. den beiden Luftkanälen 12 und ebenfalls zumindest teilweise über der Beschwadungseinrichtung 15.

Die vom Gebläse 14 durch dessen Ansaugstutzen 19 angesaugte Luft wird vom Rotor 21 des Gebläses verwirbelt, der stets in der gleichen Richtung (Pfeil 20, Fig. 3) durch einen am Gehäuse 1 angeflanschten Motor 21' angetrieben wird. Die Luft wird vom spiralförmig geformten Mantel 22 des Gebläses 14 in einen vertikalen, vom Gebläseauslaußstutzen gebildeten, kurzen Kanal 23 geleitet, welcher vertikal gegen die Deckwand 10 des Backraumes zu gerichtet ist und auf die Mitte dieser Deckwand 10 trifft. Von diesem Kanal 23 zweigen nach den beiden Seiten des Backofens gerichtete, zu den beiden Luftkanälen 12 führende Luftzufuhkanäle 24 ab, die oberhalb der Deckwand 10 des Backraumes 2 verlaufen und von einer Umschalteinrichtung 25 alternierend mit Heißluft beschickt werden. Hiezu hat die Umschalteinrichtung 25 eine um eine horizontale, in Einschubrichtung des Wagens 6 verlaufende Achse 26 schwenkbare Luftumlenkklappe 27, die derart an der Einmündungsstelle des Kanales 23 in die beiden Luftzufuhrkanäle 24 angeordnet ist, daß sie zwischen zwei Grenzlagen verschwenkbar ist, deren eine in Fig. 1 mit vollen Linien dargestellt ist, wogegen die andere strichliert gezeichnet ist. In der mit vollen Linien gezeichneten Grenzlage sperrt die Luftumlenkklappe 27 den in Fig. 1 links dargestellten Luftzufuhrkanal 24 ab, in der anderen Grenzlage den in Fig. 1 rechts liegenden Luftzufuhrkanal 24. In jeder der beiden Grenzlagen liegt die von einem ebenen Blech gebildete Klappe 27 um etwa 45° geneigt, so daß eine möglichst sanfte Umlenkung der durch den vertikalen Kanal 23 zuströmenden Luft in den jeweils wirksamen horizontalen Luftzufuhrkanal 24 erzielt wird. Der Querschnitt des Kanales 23 erweitert sich, in Einschubrichtung des Wagens 6 gemessen, von oben nach unten, insbesondere in jenem Bereich, in welchem die Klappe 27 angeordnet ist (Fig. 3), wobei diese Klappe 27 trapezförmig und um ihre breitere Basis des Trapezes schwenkbar ist. Die Achse 26 ist als Welle ausgebildet, auf welcher die Klappe 27 fix befestigt ist. Diese Welle ist aus dem Gehäuse abgedichtet herausgeführt und mit einem Hebel 28 (Fig. 3) verbunden, der von einem Getriebemotor 29 in rhythmischen Intervallen, z.B. alle 30 Sekunden, umgeschaltet wird, so daß alle 30 Sekunden die Klappe 27 in die jeweils andere Grenzlage verstellt und dadurch die Durchströmungsrichtung des Backraumes 2 geändert wird. Der Backraum 2 wird annähernd horizontal von der Warmluft durchströmt, welche an der tiefsten Stelle des Backraumes 2 durch eine Absaugöffnung 30 hindurch aus dem Backraum abgesaugt und in einen Rückströmkanal 31 geleitet wird, in welchem die Beschwadungseinrichtung 15 angeordnet ist, die somit von der aus dem Backraum 2 austretenden Luft umspült wird. Von dort gelangt die Luft über die Heizung 16 zum Gebläse 14 zurück, wodurch ein geschlossener Kreislauf für die Backluft vorliegt.

Das vom Mantel 22 gebildete Gehäuse des von einem Umwälzventilator gebildeten Gebläses 14 ist schneckenförmig ausgebildet und an seiner Übergangsstelle in den Kanal 23 nur einen Bruchteil der Backofentiefe breit. Auch der Kanal 23 soll, wenn ein zu großer Druckabfall in ihm vermieden werden soll, sich nicht auf die gesamte Tiefe des Backraumes verbreitern. Um nun die über die gesamte Backraumtiefe reichenden Luftkanäle 12 gleichmäßig mit Heißluft beschicken zu können, verbreitert sich jeder Luftzuführungskanal 24 kontinuierlich in Richtung zum Luftkanal 12, bis er an der Übergangsstelle in diesen die gesamte, in Einschubrichtung des Wagens 6 gemessene Backraumtiefe erreicht hat. Um zu vermeiden, daß dadurch im Luftzuführungskanal 24 ein starker Druckabfall auftritt, ist die Bodenwand 32 jedes Luftzuführungskanales 24 gegen die Achse 26 zu geneigt, wobei das höhere Ende der Bodenwand an einem horizontalen Rohr 33 abgestützt ist. Dieses Rohr 33 trägt zugleich eine über der Ecke des Backraumes angeordnete Einrichtung 34 zur Vergleichmäßigung der Luftströmung. Diese Einrichtung 34 hat eine Vielzahl vertikaler Lamellen 35 (Fig. 1, 4), die am Rohr 33 in gleichmäßigen Abständen voneinander parallel zueinander befestigt sind und deren Ebenen in Richtung der Luftströmung gerichtet sind. Die äußeren Ränder dieser Lamellen 35 liegen an den abgerundeten Ecken 36 des Gehäuses 1 an. Diese Einrichtung 34 bildet einen Luftstromgleichrichter, welcher die durch die düsenartige Wirkung des Luftzuführungskanales 24 in den Luftstrom eingebrachten Luftwirbel weitgehend beseitigt und zugleich die Luft in die richtige Richtung, nämlich senkrecht nach unten, umlenkt. Da diese Anordnung, ebenso wie die gesamte für den Backraum 2 maßgebende Luftführung, symmetrisch zur Vertikalachse des Backraumes 2 ist, ergeben sich für beide Richtungen der den Backraum 2 in alternierender Richtung durchströmenden Backluft gleiche Verhältnisse.

Die im Rückströmkanal 31 angeordnete Beschwadungseinrichtung 15 liegt auf der Höhe des Backraumes 2 und hat eine flache Platte 37, die parallel zur benachbarten Zwischenwand 11 angeordnet ist und an der dieser Zwischenwand zugewendeten Seite mehrere geneigt verlaufende Rinnen 38 trägt, die aus auf die Platte 37 aufgeschweißten Schienen bestehen, die wechselweise nach vorne bzw. 'hinten geneigt sind (Fig. 2). Wenn Dampf in der Backatmosphäre gebraucht wird, wird durch ein Rohr 39 über ein Magnetventil 40 Wasser auf die oberste Rinne 38 zugeführt, wobei das Wasser entlang jeder Rinne 38 bis zu deren unterem Ende läuft und von dort auf die darunterliegende Rinne 36 tropft. Da somit das Wasser entlang eines mäanderförmigen Pfades entlang der Platte 37 läuft, hat es genügend Zeit zur Verdampfung. Die Platte 37 bildet eine Verdampferplatte, welche zusammen mit den Rinnen 38 eine relativ schwere Masse bildet, die in der Aufheizphase aufgeheizt wird. Dies erfolgt einerseits durch die Heißluft des Backofens, welche die Platte 37 an ihren beiden Seiten umströmt, anderseits durch die Wärme der Rauchgase, die in einem Rauchgaskanal 41 (Fig. 1, 2) entlang der Platte 37 geführt sind. Dieser Rauchgaskanal verläuft, vom Flammrohr 18 ausgehend, mäanderförmig an der der Zwischenwand 11 abgewendeten Seite der Platte 37 in Anlage an dieser und führt zu einer auf der Höhe der tiefsten Stelle der Beschwandungseinrichtung 15 angeordneten Rauchgasabfuhröffnung 42, durch welche die Rauchgase in einen in der Rückwand des Backofens angeordneten Abzugskanal 43 strömen, der an den Kamin angeschlossen ist. Die erwähnte mäanderförmige Gestalt des Rauchgaskanales 41 wird durch horizontale Querwände 44 in diesem Kanal gebildet, die nicht über die gesamte Breite des Rauchgaskanales 41 reichen.

Im Unterdruckbereich des Gebläses 14 befindet sich eine Öffnung 45 im Gehäuse 1, welche durch einen Deckel 46 dicht verschließbar ist. Besteht die Absicht, den Dampf aus dem Backofen zu entfernen, so wird dieser Deckel 46 durch einen nicht dargestellten Hubmagneten angehoben und dadurch die Öffnung 45 freigegeben. Durch die einströmende Firschluft wird der Dampf bzw. die Warmluft aus dem Backraum 2 verdrängt. Durch den dadurch im Backraum 2 entstehenden Überdruck wird ein von einer gewichtsbelasteten, um eine horizontale Achse 49 schwenkbaren Dampfüberdruckklappe gebildetes Verschlußorgan 47 (Figs. 1, 5) geöffnet und dadurch in die in Fig. 5 strichliert dargestellte Öffnungslage gebracht. Das Verschlußorgan 47 ist an der Eintrittstelle eines Kanales 48 angeordnet, welcher vom Rückströmkanal 31 schon in der Absaugöffnung 30 abzweigt und in den Rauchgaskanal 41 mündet, und zwar an einer Stelle, welche von der Rauchgasabfuhröffnung 42 möglichst weit entfernt ist. Aus Fig. 2 ist ersichtlich, daß diese Einmündungsstelle im Bereiche der Vorderwand des Ofens liegt, wogegen die Rauchgasabfuhröffnung 42 in der Rückwand des Ofens angeordnet ist. Über das gewichtsbelastete Verschlußorgan 47 strömt somit der aus dem Backraum 2 ausgetriebene Dampf entlang eines Teiles der Beschwadungseinrichtung 15 entlang derselben und vermischt sich schließlich mit dem aus dem Flammrohr 18 kommenden Rauchgas, worauf dieses mit dem Dampf zusammen durch die Rauchgasabfuhröffnung 42 in den Rauchfang geleitet wird. Der Vorteil dieses Systems besteht darin, daß der sehr feuchte Dampf von Rauchgas, vor allem aber von den heißen Wänden der Beschwadungseinrichtung 15 abgetrocknet wird und dadurch eine Versottung des Kamins verhindert wird.

Die Luftumlenkklappe 27 bzw. ihre Betätigungsvorrichtung sind so ausgebildet, daß diese Klappe 27 in einer vertikalen Mittelstellung fixiert werden kann. Die vom Gebläse 14 geförderte Luft strömt dann zu beiden Seiten der Klappe 27 zu gleichen Teilen über die beiden Luftzuführkanäle 24 in beide Luftkanäle 12 ein. Dies bewirkt, daß man auch bei geöffneter Türe 3 beide Zwischenwände 11 gleichmäßig aufgeheizt bzw. heißhalten kann.

**Patentansprüche**

1. Backofen mit einem durch eine Türe zugänglichen Backraum (2), in den ein das Backgut tragender, während des Backprozesses stillstehender Wagen (6) einbringbar ist, mit zwei seitlich des Backraumes (2) zu dessen beiden Seiten über die wirksame Backraumhöhe durchlaufenden Luftkanälen (12), deren jeder vom Backraum (2) durch eine mit einer Vielzahl von Luftdurchtrittsöffnungen (13) versehene Zwischenwand (11) getrennt ist, welche Luftkanäle (12) während des Backprozesses von einem Gebläse (14) über eine Umschalteinrichtung (25) alternierend mit Heißluft versorgt werden, die von einer Heizung (16) erwärmt und von einer Beschwadungseinrichtung (15) befeuchtet wird, den Backraum (2) in alternierender Richtung quer durchströmt und danach wieder zur Saugseite des Gebläses (14) im Kreislauf zurückgesaugt wird, wobei das Gebläse (14) und die Heizung (16) höher als der Backraum (2) und zumindest zum Teil über diesem angeordnet sind, und wobei die Deckwand (10) des Backraumes (2) dicht angeschlossen ist, dadurch gekennzeichnet, daß die Heizung (16) an der Saugseite des Gebläses (14) im Rückstromweg der Heißluft angeordnet ist und daß ein gegen die Deckwand (10) des Backraumes (2) gerichteter Kanal (23) an den Druckstutzen des Gebläses (14) angeschlossen ist oder diesen Druckstutzen bildet, wobei das im Mittenbereich zwischen den beiden Luftkanälen (12) liegende untere Ende dieses Kanals (23) zu zwei oberhalb der Deckwand (10) des Backraumes (2) verlaufenden Luftzufuhrkanälen (24) führt, die an die beiden Luftkanäle (12) angeschlossen sind, wobei die Umschalteinrichtung (25) in diesem unteren Kanalende zwischen den beiden Luftzufuhrkanälen (24) angeordnet ist.

2. Backofen nach Anspruch 1, dadurch gekennzeichnet, daß sich der Querschnitt des Kanales (23) gegen die Deckwand (10) des Backraumes (2) zu vergrößert und daß die Umschalteinrichtung (25) an der Stelle des größten Querschnittes dieses Kanales (23) angeordnet ist.

3. Backofen nach Anspruch 1 oder 2, dadurch gekennzeichnet, daß die Umschalteinrichtung (25) eine um eine horizontale, in Einbringerichtung des Wagens (6) verlaufende Achse (26) schwenkbare Luftumlenkklappe (27) aufweist.

4. Backofen nach Anspruch 3, dadurch gekennzeichnet, daß die Luftumlenkklappe (27) trapezförmig und um die breitere Basis des Trapezes schwenkbar ist.

5. Backofen nach einem der Ansprüche 1 bis 4, dadurch gekennzeichnet, daß sich die beiden Luftzufuhrkanäle (24) in Richtung zu den Luftkanälen (12) zu verbreitern.

6. Backofen nach Anspruch 5, dadurch gekennzeichnet, daß die Höhe der beiden Luftzufuhrkanäle (24) in Richtung zu der Luftkanälen (12) zu abnimmt, vorzugsweise durch eine zur Luftumlenkklappe (27) geneigte Bodenwand (32) der beiden Luftzufuhrkanäle (24).

7. Backofen nach einem der Ansprüche 1 bis 6, dadurch gekennzeichnet, daß an der Übergangsstelle jedes Luftzuführungskanales (24) in den Luftkanal (12), vorzugsweise im Bereich der Ecke des Backraumes (2), eine Einrichtung (34) zur Vergleichmäßigung der Luftströmung vorgesehen ist.

8. Backofen nach Anspruch 7, dadurch gekennzeichnet, daß die Einrichtung (34) zur Vergleichmäßigung der Luftströmung von mehreren stehenden Lamellen (35) gebildet ist, die parallel zueinander mit in Richtung der Luftströmung gerichteten Ebenen angeordnet sind.

9. Backofen nach Anspruch 8, dadurch gekennzeichnet, daß die Lamellen an einen in Richtung der Einbringerichtung des Wagens (2) verlaufenden Rohr (33) befestigt sind, das zugleich zur Abstützung der geneigten Bodenwand (32) des Luftzufuhrkanales (24) dient.

10. Backofen nach einem der Ansprüche 1 bis 9, dadurch gekennzeichnet, daß zur Absaugung der in den Backraum (2) eingetretenen Luft unten im Backraum (2), vorzugsweise an dessen tiefster Stelle, eine Absaugöffnung (30) vorgesehen ist, an die ein zur Beschwadungseinrichtung (15) und sodann über die Heizung (16) zum Gebläse (14) führender Rückströmkanal (31) angeschlossen ist.

11. Backofen nach einem der Ansprüche 1 bis 10, dadurch gekennzeichnet, daß das Gebläse (14) mittig über dem Backraum (2) mit normal zur Einschubrichtung des Wagens (6) liegender horizontaler Achse des Rotors (21) angeordnet ist.

12. Backofen nach einem der Ansprüche 1 bis 11, dadurch gekennzeichnet, daß das Gebläse (14) einen spiralförmigen, die Luft vom Rotor (21) zum gegen den Backraum (2) gerichteten Kanal (23) führenden Mantel (22) hat.

13. Backofen nach einem der Ansprüche 1 bis 12, dadurch gekennzeichnet, daß der gegen den Backraum (2) gerichtete Kanal (23), die an ihn angeschlossenen Luftzufuhrkanäle (24) und die Luftkanäle (12) symmetrisch zur vertikalen Achse des Backraumes (2) ausgebildet sind.

**Revendications**

1. Four de boulanger avec un compartiment de cuisson (2) accessible par une portE, dans lequel peut être introduit un chariot (6) supportant la pâte à cuire et restant immobile pendant l'opération de cuisson, avec deux canaux d'aération (12), établis latéralement des deux côtés du compartiment de cuisson (2) et s'étendant au-dessus du niveau utile du compartiment du cuisson, chacun de ces canaux étant séparé du compartiment de cuisson (2) par une paroi intermédiaire (11) pourvue d'un certain nombre d'orifices de passage d'air (13), lesdits canaux d'aération (12), durant l'opération de cuisson, étant à partir d'un ventilateur (14) alimentés alternativement en air chaud par l'intermédiaire d'un dispositif inverseur (25), cet air chaund étant chauffé par un élément chauffant (16) et humidifié par un dispositif d'exhalaison (15), et balayant transversalement le compartiment de cuisson (2) en direction alternée, et étant ensuite réaspiré dans le circuit vers le côté aspiration du ventilateur (14), le ventilateur (14) et l'élément chauffant (16) étant disposés plus haut que le compartiment de cuisson (2) et tout au moins partiellement en dessus de celui-ci, et la paroi du couvercle (10) du compartiment de cuisson (2) étant obturée étanche, ledit four de boulanger étant caractérisé en ce que l'élément chauffant (16) est disposé au côté aspiration du ventilateur (14) sur le trajet de retour de l'air chaud, et en ce qu'un canal (23) orienté en direction de la paroi couvercle (10) du compartiment de cuisson (2) est raccordé à la tubulure de refoulement du ventilateur (14) ou constitue cette tubulure de refoulement, l'extrémité inférieure de ce canal (23) située dans l'espace intermédiaire entre les deux canaux d'aération (12) conduisant à deux canaux d'alimentation d'air (24) s'étendant au-dessus de la paroi couvercle (10) du compartiment de cuisson (2) et qui sont raccordés aux deux canaux d'aération (12), le dispositif inverseur (25) étant disposé dans cette extrémité de canal inférieure entre les deux canaux d'alimentation d'air (24).

2. Four de boulanger selon la revendication 1, caractérisé en ce que la section du canal (23) va en s'agrandissant en direction de la paroi couvercle (10) du compartiment de cuisson (2), et en ce que le dispositif inverseur (25) est disposé à l'endroit où la section de ce canal (23) est la plus grande.

3. Four de boulanger selon la revendication 1 ou 2, caractérisé en ce que le dispositif inverseur (25) comporte un volet de dérivation d'air (27) pivotant autour d'un axe horizontal (26) s'étendant dans la direction d'introduction du chariot (6).

4. Four de boulanger selon la revendication 3, caractérisé en ce que le volet de dérivation d'air (27) est de forme trapézoïdale et est pivotant autour de la grande base du trapèze.

5. Four de boulanger selon l'une quelconque des revendications 1 à 4, caractérisé en ce que les deux canaux d'alimentation d'air (24) vont en s'élargissant en direction des canaux d'aération (12).

6. Four de boulanger selon la revendication 5, caractérisé en ce que la hauteur des deux canaux d'alimentation d'air (24) s'abaisse en allant en direction des canaux d'aération (12), cette réduction de hauteur étant obtenue de préférence au moyen d'une paroi de fond inclinée (32) des deux canaux d'alimentation d'air (24), ladite paroi de fond étant inclinée en direction du volet de dérivation d'air (27).

7. Four de boulanger selon l'une quelconque des revendications 1 à 6, caractérisé en ce que pour l'égalisation du débit d'air, il est prévu un dispositif (34) au point de passage de chaque canal d'alimentation d'air (24) dans le canal d'aération (12), de préférence dans le secteur d'angle du compartiment de cuisson (2).

8. Four de boulanger selon la revendication 7, caractérisé en ce que le dispositif (34) pour l'égalisation du débit d'air est constitué par plusieurs lamelles debout (35), disposées parallèles l'une par rapport à l'autre avec plans orientés dans la direction du débit d'air.

9. Four de boulanger selon la revendication 8, caractérisé en ce que les lamelles sont fixées sur un tube (33) s'étendant dans la direction du sens d'introduction du chariot (6), ce tube servant en même temps au soutien de la paroi de fond inclinée (32) du canal d'alimentation d'air (24).

10. Four de boulanger selon l'une des revendications 1 à 9, caractérisé en ce que pour l'aspiration de l'air ayant pénétré dans le compartiment de cuisson (2), il est prévu au point le plus bas de ce compartiment un orifice d'aspiration (30) auquel est raccordé un canal de retour (31) conduisant au dispositif d'exhalaison (15) et ensuite au ventilateur (14) en passant sur l'élément chauffant (16).

11. Four de boulanger selon l'une des revendications 1 à 10, caractérisé en ce que le ventilateur (14) est disposé au centre et au-dessus du compartiment de cuisson (2) avec l'axe horizontal du rotor (21) établi perpendiculaire par rapport à la direction d'introduction du chariot (6).

12. Four de boulanger selon l'une quelconque des revendications 1 à 11, caractérisé en ce que le ventilateur (14) comporte une gaîne ou carter en spirale (22) guidant à partir du rotor (21) l'air vers le canal (23) orienté en regard du compartiment de cuisson (2).

13. Four de boulanger selon l'une des revendications 1 à 12, caractérisé en ce que le canal (23) orienté en regard du compartiment de cuisson (2), les canaux d'alimentation d'air (24) raccordés à ce canal et les canaux d'aération (12) sont réalisés symétriques par rapport à l'axe vertical du compartiment de cuisson (2).

**Claims**

1. Baking oven with a baking space (2) which is accessible through a door and into which a carriage (6) carrying the material for baking and standing still during the baking process can be introduced, having two air channels (12) which run laterally through the baking space (2) on both sides thereof over the effective baking space height, each of which is separated from the baking space (2) by means of an intermediate wall (11) provided with a plurality of air passage openings (13) and which are alternately supplied with hot air, during the baking process, by a fan (14) by way of a switch-over device (25), which air is heated by a heating system (16), is moistened by a vapour generator device (15), flows transversely through the baking space (2) in alternating direction and is subsequently sucked back again in circulation to the suction side of the fan (14), with the fan (14) and the heating system (16) being arranged at a higher level than the baking space (2) and at least in part over the latter and with the cover wall (10) of the baking space (2) being tightly sealed, characterised in that the heating system (16) is arranged on the suction side of the fan (14) in the return flow path of the hot air and in that a channel (23) directed towards the cover wall (10) of the baking space (2) links up with the pressure joint of the fan (14) or forms this joint, the lower end of this channel (23), which lies in the central area between the two air channels (12), leading to two air supply channels (24) which run above the cover wall (10) of the baking space (2) and are connected to the two air channels (12), with the switch-over device (25) being arranged in this lower channel end between the two air supply channels (24).

2. Baking oven according to claim 1, characterised in that the cross section of the channel (23) increases towards the cover wall (10) of the baking space (2) and in that the switch-over device (25) is arranged at the site of the largest cross section of this channel (23).

3. Baking oven according to claim 1 or 2, characterised in that the switch-over device (25) has an air deflection flap (27) which can be pivoted about a horizontal axis (26) running in the direction of introduction of the carriage (6).

4. Baking oven according to claim 3, characterised in that the air deflection flap (27) is trapezoidal and can be pivoted about the broader base of the trapezoid.

5. Baking oven according to one of the claims 1 to 4, characterised in that the two air supply channels (24) widen in the direction of the air channels (12).

6. Baking oven according to claim 5, characterised in that the height of the two air supply channels (24) decreases in the direction of the air channels (12), preferably by means of a base wall (32) of the two air supply channels (24) which is inclined in relation to the air deflection flap (27).

7. Baking oven according to one of the cluims 1 to 6, characterised in that a device (34) for evening out the air flow is provided at the site of transition of each air supply channel (24) to the air channel (12), preferably in the area of the corner of the baking space (2).

8. Baking oven according to claim 7, characterised in that the device (34) for evening out the air flow is formed of several vertical plates (35) which are arranged parallel to each other with planes directed in the direction of the air flow.

9. Baking oven according to claim 8, characterised in that the plates are secured to a pipe (33) which runs in the direction of introduction of the carriage (2) and which, at the same time, serves to support the inclined base wall (32) of the air supply channel (24).

10. Baking oven according to one of the claims 1 to 9, characterised in that a suction outlet (30) is provided for the purpose of removing by suction the air which has entered into the baking space (2) at the bottom of the baking space (2), preferably at its lowest point, to which suction outlet (30) there is connected a return flow channel (31) which leads to the vapour generator device (15) and then by way of the heating system (16) to the fan (14).

11. Baking oven according to one of the claims 1 to 10, characterised in that the fan (14) is arranged in the centre above the baking space (2) with the horizontal axis of the rotor (21) lying normal to the direction of insertion of the carriage (6).

12. Baking oven according to one of the claims 1 to 11, characterised in that the fan (14) has a helical casing (22) conducting the air from the rotor (21) to the channel (23) which is directed towards the baking space (2).

13. Baking oven according to one of the claims 1 to 12, characterised in that the channel (23) which is directed towards the baking space (2), the air supply channels (24) connected thereto and the air channels (12) are formed so as to be symmetrical in relation to the vertical axis of the baking space (2).

FIG. 1

FIG. 5

FIG. 4

FIG. 2

FIG. 3